(19) Europäisches Patentamt / European Patent Office / Office européen des brevets

(11) **EP 2 943 370 B1**

(12) **FASCICULE DE BREVET EUROPEEN**

(45) Date de publication et mention de la délivrance du brevet:
**20.05.2020 Bulletin 2020/21**

(21) Numéro de dépôt: **13814896.0**

(22) Date de dépôt: **19.12.2013**

(51) Int Cl.:
**B60L 15/20** *(2006.01)*

(86) Numéro de dépôt international:
**PCT/EP2013/077330**

(87) Numéro de publication internationale:
**WO 2014/108294 (17.07.2014 Gazette 2014/29)**

(54) **SYSTÈME ET PROCÉDÉ CORRESPONDANT DE COMMANDE DE LA VITESSE DE ROTATION D'UN MOTEUR ÉLECTRIQUE D'UN VÉHICULE AUTOMOBILE**

SYSTEM UND ENTSPRECHENDES VERFAHREN ZUR REGELUNG DER DREHZAHL EINES ELEKTROMOTORS EINES KRAFTFAHRZEUGS

SYSTEM AND CORRESPONDING METHOD FOR CONTROLLING THE ROTATION SPEED OF AN ELECTRIC MOTOR OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.01.2013 FR 1350220**

(43) Date de publication de la demande:
**18.11.2015 Bulletin 2015/47**

(73) Titulaire: **Renault S.A.S.**
**92100 Boulogne-Billancourt (FR)**

(72) Inventeurs:
• **FONTVIEILLE, Laurent**
  **F-91190 Gif-sur-Yvette (FR)**
• **BUIS, Emmanuel**
  **F-91330 Verrières-le-Buisson (FR)**
• **MOROSAN, Petru-Daniel**
  **F-35510 Cesson-Sévigné (FR)**
• **PRAT, Samuel**
  **F-35200 Rennes (FR)**

(56) Documents cités:
**EP-A1- 2 484 547     WO-A2-2012/042325
FR-A1- 2 970 682     JP-A- 2005 269 834**

**EP 2 943 370 B1**

**Description**

L'invention concerne la commande de la vitesse de rotation d'un moteur électrique de véhicule automobile, et plus particulièrement la réduction des oscillations de la vitesse de rotation.

La commande de la vitesse de rotation d'un moteur électrique permet généralement d'interpréter la volonté du conducteur qui agit sur les pédales d'accélérateur et de frein pour élaborer une consigne de couple positive ou négative. Cette consigne de couple est transmise aux composants d'électronique de puissance (hacheur, onduleur...) pour élaborer des consignes électriques (courant et tension) pour obtenir le couple désiré et enfin une vitesse de rotation du moteur.

Généralement, on appelle « chaîne de traction » l'ensemble des organes électromécaniques qui assurent la transmission d'une consigne de couple aux roues (électronique de puissance, moteur électrique, suspension du moteur, réducteur...).

De manière classique, pour suivre une consigne de couple passant de 0 à une valeur positive, la vitesse de rotation du moteur va augmenter jusqu'à une valeur correspondant au couple désiré. Cela étant, cette augmentation n'est généralement pas linéaire (réponse idéale) et des oscillations apparaissent. Un exemple est WO 2012/042325.

Lors d'un roulage normal, la consigne de couple subie des variations. Ces variations ne sont généralement pas parfaitement suivies par la vitesse du moteur et on peut observer des oscillations amorties dans l'évolution de la vitesse de rotation du moteur. Ces oscillations sont désagréables pour le conducteur du véhicule.

Aussi, les machines électriques étant capables de produire de très forts niveaux de couple dans des délais très courts, le phénomène évoqué ci-avant est amplifié par rapport aux chaînes de traction munies de moteurs thermiques.

Il a été proposé de réduire les oscillations en corrigeant la consigne de couple à partir d'une mesure du régime moteur (ou de la vitesse du véhicule). Plus précisément, il a été proposé de dériver deux fois le régime moteur pour en extraire uniquement les oscillations gênantes, de multiplier par un coefficient le régime moteur dérivé deux fois pour enfin soustraire le résultat à une consigne de couple.

Cette solution est adaptée aux oscillations apparaissant dans les véhicules à moteur thermique. Cette solution n'est pas assez rapide pour traiter les oscillations au sein d'un véhicule à traction électrique ou hybride. Aussi, cette solution a pour inconvénient d'être en retard par rapport aux oscillations qu'elle ne peut pas anticiper.

On pourra également se référer au document WO 2012/011521 qui propose d'utiliser un correcteur direct et un correcteur par rétroaction. Le correcteur direct de ce document filtre les variations de la consigne de couple afin d'éviter de trop exciter les fréquences dans la zone de résonnance de la chaîne de traction. Le correcteur par rétroaction réduit les oscillations en modifiant le gain et la phase de la réponse fréquentielle de la chaîne de traction dans la zone de résonance.

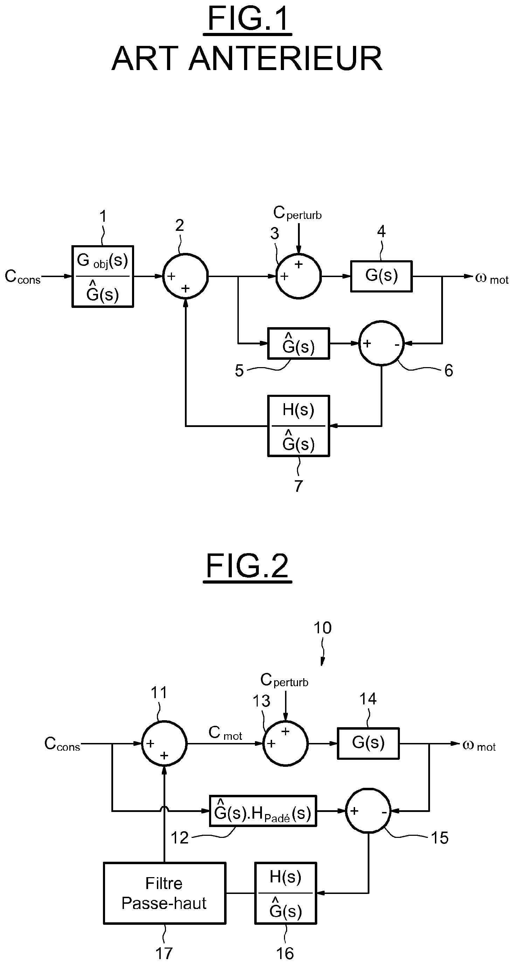

Sur la figure 1 on a représenté schématiquement l'association du correcteur direct et du correcteur par rétroaction du document WO 2012/011521. Une consigne de couple $C_{cons}$ est tout d'abord élaborée, par exemple à partir des informations fournies par les pédales du véhicule et correspond à la consigne de couple telle que désirée par le conducteur. Cette consigne $C_{cons}$ est appliquée à l'entrée d'un correcteur direct 1 ayant la fonction de transfert suivante :

$$\frac{G_{obj}(s)}{\hat{G}(s)}$$

Avec :

$G_{obj}(s)$ la fonction de transfert objectif, c'est-à-dire sans oscillations,
$\hat{G}(s)$ le modèle de commande, c'est-à-dire le modèle de la chaîne de traction.

Un additionneur 2 est relié par une première entrée à la sortie du correcteur 1. La sortie de l'additionneur 2 est reliée à une première entrée d'un autre additionneur 3 dont une autre entrée reçoit une perturbation $C_{perturb}$. La sortie de l'additionneur 3 communique avec la chaîne de traction 4 ayant une fonction de transfert G(s). La chaîne de traction 4 permet d'obtenir une vitesse de rotation du moteur $\omega_{mot}$.

Le correcteur par rétroaction décrit dans ce document comprend un correcteur 5 ayant pour fonction de transfert $\hat{G}(s)$ dont la sortie est comparée avec la vitesse du moteur $\omega_{mot}$ (soustracteur 6). La sortie du soustracteur 6 est reliée à un correcteur supplémentaire 7 ayant pour fonction de transfert :

$$\frac{H(s)}{\hat{G}(s)}$$

Où *H(s)* est choisie pour corriger les oscillations.

Le modèle de commande $\hat{G}(s)$ a une réponse fréquentielle faisant apparaitre une zone de résonnance accompagnée d'un déphasage. De plus, ce modèle de commande est incomplet et ne correspond pas précisément à la chaîne de traction réelle, alors qu'il est destiné à fonctionner si la relation suivante est vérifiée :

$$\hat{G}(s) = G(s)$$

Cette relation ne permet pas de prendre en considération le vieillissement des chaines de traction et la dispersion de leurs propriétés sur plusieurs véhicules.

L'invention a pour but d'obtenir une réduction des oscillations adaptée aux véhicules électriques, de proposer un meilleur modèle de commande, et d'obtenir une meilleure réponse fréquentielle.

Selon un aspect, il est proposé un système de commande de la vitesse de rotation d'un moteur électrique d'un véhicule automobile à propulsion électrique ou hybride comprenant un correcteur par rétroaction de la consigne de couple utilisant un modèle de commande.

Selon une caractéristique générale, la grandeur d'entrée du correcteur est la consigne de couple telle que demandée par le conducteur et le correcteur utilise un retard pur.

Ainsi, contrairement aux solutions proposées dans l'art antérieur, c'est directement la consigne de couple telle que demandée par le conducteur qui est appliquée en entrée du correcteur et non une consigne obtenue après le bouclage de la rétroaction. Il est ainsi plus facile de mettre au point le modèle de commande et on facilite également la correction.

Aussi, alors que dans l'art antérieur on n'utilise pas de retard pur, ici, on applique une correction qui utilise un tel retard. On obtient ainsi une meilleure représentation de la chaîne de traction pour les fréquences supérieures à la fréquence de résonnance.

Lequel le retard pur peut être une approximation de Padé, par exemple une fonction rationnelle pouvant se mettre sous la forme d'un rapport de deux polynômes. L'approximation de Padé est bien adaptée pour approximer un retard pur.

Le modèle de commande peut comprendre un premier filtre passe-bas ayant une première constante de temps correspondant à la constante de temps électromécanique, c'est-à-dire la constante de temps propres à tous les systèmes électromécaniques. Un tel filtre passe bas permet de se rapprocher davantage de la réponse de la chaine de traction.

Le modèle de commande peut comprendre un deuxième filtre passe bas ayant une deuxième constante de temps inférieure à la première constante de temps, voire très inférieure à la première constante de temps. On obtient ainsi une meilleure représentation de la chaîne de traction en ce qui concerne le déphasage de la réponse fréquentielle.

Le système peut comprendre en outre des moyens de calcul de la somme de la consigne de couple telle que demandée par le conducteur et d'une consigne de couple obtenue par rétroaction communiquant avec la chaine de traction du véhicule pour obtenir une vitesse de rotation du moteur, des moyens de calcul de la différence entre la vitesse de rotation du moteur et la sortie du correcteur utilisant un modèle de commande et un retard pur, et un correcteur supplémentaire du résultat de cette différence ayant pour sortie ladite consigne de couple obtenue par rétroaction.

Le système peut comprendre un filtre passe-haut apte à filtrer la sortie du correcteur supplémentaire apte à fournir ladite consigne de couple obtenue par rétroaction. L'utilisation d'un filtre passe haut permet notamment d'atténuer l'impact de toutes les erreurs statiques entre la chaîne de traction et le correcteur.

Selon un autre aspect, il est proposé un procédé de commande de la vitesse de rotation d'un moteur électrique d'un véhicule automobile à propulsion électrique ou hybride comprenant une correction par rétroaction utilisant un modèle de commande.

Selon une caractéristique générale du procédé, on corrige par rétroaction une consigne de couple telle que demandée par le conducteur en utilisant un retard pur.

Le retard pur peut être une approximation de Padé.

La correction peut comprendre un premier filtrage passe bas ayant une première constante de temps correspondant à la constante de temps électromécanique.

Le modèle de commande comprend un deuxième filtrage passe bas ayant une deuxième constante de temps inférieure à ladite première constante de temps.

Le procédé peut comprendre en outre un calcul de la somme de la consigne de couple telle que demandée par le conducteur et d'une consigne de couple obtenue par rétroaction communiquée à la chaine de traction du véhicule pour obtenir une vitesse de rotation du moteur, un calcul de la différence entre la vitesse de rotation du moteur et le résultat de la correction utilisant un modèle de commande et un retard pur, et une correction supplémentaire du résultat de cette différence pour obtenir ladite consigne de couple obtenue par rétroaction.

Le procédé un filtrage passe-haut pour obtenir ladite consigne de couple obtenue par rétroaction.

D'autres buts, caractéristiques et avantages apparaîtront à la lecture de la description suivante donnée uniquement en tant qu'exemple non limitatif et faite en référence aux dessins annexés sur lesquels :

- la figure 1, déjà décrite, illustre schématiquement la commande de la vitesse de rotation d'un moteur selon l'art antérieur,
- la figure 2 illustre la commande de la vitesse de rotation d'un moteur selon un mode de mise en œuvre et de réalisation de l'invention,
- la figure 3 illustre la réponse fréquentielle du modèle de commande selon l'invention.

Sur la figure 2, on a représenté un système de commande 10 dans lequel une consigne de couple $C_{cons}$ telle que désirée par le conducteur par l'intermédiaire des pédales est fournie d'une part à une première entrée d'un additionneur 11 et à un correcteur 12. La sortie de l'additionneur 11 est connectée à un additionneur 13 pour ajouter une perturbation $C_{perturb}$. La sortie de l'additionneur 13 est une consigne de couple qui est fournie à la chaîne de traction 14 ayant une fonction de transfert G(s), qui, en réponse, contrôle un moteur électrique pour obtenir une vitesse de rotation $\omega_{mot}$.

Le correcteur 12 a pour fonction de transfert $\hat{G}(s) \times H_{Padé}(s)$ où $H_{Padé}(s)$ est un retard pur, par exemple une approximation de Padé. La sortie du correcteur 12 est connectée à un soustracteur 15 qui calcule la différence entre une vitesse de rotation modélisée par le modèle de commande avec le retard pur et la vitesse du moteur réelle $\omega_{mot}$.

La sortie du soustracteur 15 communique avec l'entrée d'un correcteur supplémentaire 16 destiné à atténuer les oscillations et dont la fonction de transfert est :

$$\frac{H(s)}{\hat{G}(s)}$$

La sortie du correcteur supplémentaire 16 communique avec un filtre passe-haut 17, qui fournit une consigne corrigée à une autre entrée de l'additionneur 11. Le filtre passe-haut peut avoir une fonction de transfert définie par la pulsation de coupure $\omega_{HP}$ :

$$\frac{s}{s + \omega_{HP}}$$

L'approximation de Padé est particulièrement bien adaptée pour approximer un retard, et peut se présenter sous la forme de la fonction rationnelle suivante :

$$H_{Padé}(s) = \frac{P_m(s)}{Q_n(s)}$$

Où $P_m(s)$ et $Q_n(s)$ sont deux polynômes définis par les deux équations suivantes :

$$P_m(s) = \sum_{k=0}^{m} \frac{(m+n-k)!\,m!}{(m+n)!\,k!\,(m-k)!}(-s)^k$$

$$Q_n(s) = \sum_{k=0}^{n} \frac{(m+n-k)!\,n!}{(m+n)!\,k!\,(n-k)!}s^k$$

On peut choisir n égal à m et se limiter à un ordre 2 (n=m=2). La fonction de transfert $H_{Padé}$ d'un retard pur $\tau$ s'exprime alors selon l'équation suivante :

$$H_{Padé}(s) = \frac{s^2 - \dfrac{6}{\tau}s + \dfrac{12}{\tau^2}}{s^2 + \dfrac{6}{\tau}s + \dfrac{12}{\tau^2}}$$

Aussi, le modèle de commande $\hat{G}(s)$ peut comprendre deux filtres passe bas. Plus précisément, le modèle de commande $\hat{G}(s)$ peut comprendre un premier filtre passe-bas avec une première constante de temps $T_{p1}$ propre à tous les systèmes électromécaniques. Ce premier filtre passe-bas peut avoir la fonction de transfert suivante :

$$\frac{1}{1 + T_{p1} \cdot s}$$

En outre, le modèle de commande $\hat{G}(s)$ peut comprendre un autre filtre passe-bas ayant une deuxième constante de temps $T_{p2}$ choisie pour être très inférieure à $T_{p1}$ ($T_{p1} << T_{p2}$). Ce deuxième filtre passe-bas peut avoir la fonction de transfert suivante :

$$\frac{1}{1 + T_{p2} \cdot s}$$

On peut ainsi avoir un modèle de commande permettant d'obtenir une meilleure représentativité en ce qui concerne le déphasage de la réponse fréquentielle.

On peut donc choisir un modèle de commande comprenant les deux filtres passe bas de la forme suivante :

$$\hat{G}(s) = \frac{b_2 s^2 + b_1 s + b_0}{\left(s^2 + 2\zeta\omega_p s + \omega_p\right)\left(1 + T_{P1}s\right)\left(1 + T_{P2}s\right)}$$

Avec :

$b_2$, $b_1$ et $b_0$ les zéros de la fonction de transfert, $b_2$ étant le gain en statique,
$\omega_p$ la fréquence de résonnance, et
$\zeta$ le facteur d'amortissement à la fréquence de résonance.

On peut noter que contrairement au modèle de commande utilisé dans l'art antérieur (WO 2012/011521), il n'y a pas d'intégrateur (c'est-à-dire 1/s), et il y a deux filtres passe bas. Le modèle sans intégrateur correspond davantage à la réponse de la chaîne de traction.

On peut enfin écrire la fonction de transfert du correcteur :

$$\hat{G}(s) \cdot H_{Padé}(s) = \frac{b_2 s^2 + b_1 s + b_0}{\left(s^2 + 2\zeta\omega_p s + \omega_p\right)\left(1 + T_{P1}s\right)\left(1 + T_{P2}s\right)} \cdot \frac{s^2 - \dfrac{6}{\tau}s + \dfrac{12}{\tau^2}}{s^2 + \dfrac{6}{\tau}s + \dfrac{12}{\tau^2}}$$

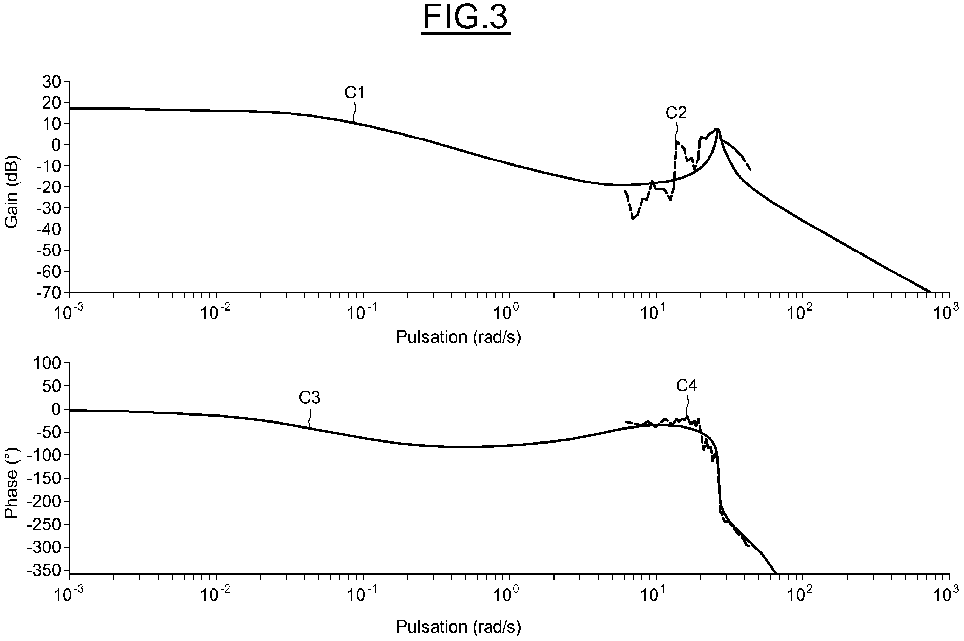

Sur la figure 3, on a représenté en trait continu l'évolution du gain en décibel du correcteur $\hat{G}(s) \cdot H_{Padé}(s)$ (courbe C1) en fonction de la vitesse de rotation d'un moteur en radians par seconde. Sur cette figure, on a également représenté en trait discontinu le gain mesuré sur la chaîne de traction du véhicule (courbe C2). On a également représenté sur la figure 3 la phase en degré du modèle $\hat{G}(s) \cdot H_{Padé}(s)$ (courbe C3) et en trait discontinu la phase mesurée sur la chaîne de traction du véhicule.

Il convient de noter que le déphasage obtenu est particulièrement proche de celui mesuré. Modèle de commande ayant pour fonction de transfert $\hat{G}(s) \cdot H_{Padé}(s)$ permet donc d'obtenir une meilleure réponse fréquentielle.

On peut également noter que l'invention permet d'obtenir de meilleures marges de stabilité, notamment en ce qui concerne la marge de gain, la marge de phase et la marge de retard.

Afin de déterminer ces marges, il est nécessaire d'obtenir les fonctions de transfert du système, et plus précisément en considérant la fonction de transfert entre une perturbation et la vitesse du moteur, et en se plaçant dans un cas idéal $\left( G(s) = \hat{G}(s) \cdot H_{Padé}(s) \right)$ :

$$\frac{\omega_{mot}(s)}{C_{perturb}(s)} = \frac{G(s)}{1 + \dfrac{s}{s + \omega_{HP}} H(s)}$$

Dans cette fonction de transfert et comme indiqué ci-avant, le correcteur H(s) a pour fonction de diminuer les oscillations. On peut imposer à H(s) la forme suivante :

$$H(s) = \frac{p_1 s + p_0}{\left(s^2 + 2\omega_0 s + \omega_0^2\right)\left(\dfrac{s}{\beta\omega_0} + 1\right)^2}$$

Où $p_1$ et $p_0$ sont calculés pour résoudre l'équation suivante :

$$\left(s^2 + 2\omega_0 s + \omega_0\right)\left(\frac{s}{\beta\omega_0} + 1\right) - \left(p_1 s + p_0\right) = \left(s^2 + 2\zeta\omega_0 s + \omega_0\right)\left(q_2 s^2 + q_1 s + q_0\right)$$

Dans laquelle le terme $\beta$ permet le paramétrage de la constante de temps du correcteur H(s) en fonction de la fréquence de résonnance du modèle de commande. Cette équation a une solution unique et les paramètres $q_2$, $q_1$, $q_0$, $p_1$ et $p_0$ sont exprimés en fonctions de $\beta$, $\omega_0$ et $\zeta$.

En utilisant une approximation de Padé d'ordre 2 telle que définie ci-avant, les coefficients $p_1$ et $p_0$ sont calculés au moyen de l'équation suivante :

$$\left(s^2 + 2\omega_0 s + \omega_0\right)\left(\frac{s}{\beta\omega_0} + 1\right)\left(s^2 + \frac{6}{\tau}s + \frac{12}{\tau^2}\right) - \left(p_1 s + p_0\right)\left(s^2 + \frac{6}{\tau}s + \frac{12}{\tau^2}\right)$$
$$= \left(s^2 + 2\zeta\omega_0 s + \omega_0\right)\left(q_3 s^3 + q_2 s^2 + q_1 s + q_0\right)$$

Et la fonction de transfert entre une perturbation et la vitesse de rotation du moteur s'écrit alors :

$$\frac{\omega_{mot}(s)}{C_{perturb}(s)} = \frac{\left(b_2 s^2 + b_1 s + b_0\right)\left(s + \omega_{HP}\right)\left(\dfrac{s}{\beta\omega_0} + 1\right)}{\left[\left(s + \omega_{HP}\right)\left(s^2 + 2\omega_0 s + \omega_0^2\right)\left(\dfrac{s}{\beta\omega_0} + 1\right) + s\left(p_1 s + p_0\right)\right]\left(T_{p1} s + 1\right)\left(T_{p2} s + 1\right)} H_{Padé}(s)$$

On peut noter qu'il n'y a pas d'oscillateur, c'est-à-dire une disparition du terme : $(s^2 + 2\zeta\omega_0 s + \omega_0^2)$.

On peut enfin calculer les marges de stabilité du correcteur par rétroaction, dans lequel avec le filtre passe haut, on obtient la fonction de transfert suivante :

$$\frac{\omega_{mot}(s)}{C_{perturb}(s)} = \frac{-s \cdot H(s)}{G(s)\left(s + \omega_{HP}\right)}$$

La fonction de transfert en boucle ouverte $H_{bo}(s)$ d'un tel transfert (en se référant à la figure 2) est :

$$H_{bo}\left(s\right)=\frac{-s \cdot H\left(s\right)}{\left(s+\omega_{HP}\right)}.$$

L'homme du métier sait calculer lesdites marges d'une telle fonction de transfert. Ici, on obtient une marge de gain de 4,16 décibels, une marge de phase de 122,16 degrés et une marge de retard de 49.8 millisecondes. La pulsation de coupure du filtrage est $5 \times \omega_0$.

On peut noter que l'on obtient une meilleure stabilité et une bonne robustesse face à la dispersion et dérivé du retard.

Grâce à l'invention, on obtient une réduction des oscillations adaptée aux véhicules électriques, en utilisant un meilleur modèle de commande avec une bonne réponse fréquentielle.

## Revendications

1. Système de commande de la vitesse de rotation d'un moteur électrique d'un véhicule automobile à propulsion électrique ou hybride comprenant un correcteur par rétroaction de la consigne de couple utilisant un modèle de commande ($\hat{G}(s)$), la grandeur d'entrée du correcteur ($C_{cons}$) étant la consigne de couple telle que demandée par le conducteur, **caractérisé en ce que** le correcteur utilise un retard pur ($H_{padé}(s)$), la sortie dudit correcteur (12) étant connectée à un soustracteur (15) qui calcule la différence entre une vitesse de rotation modélisée par le modèle de commande avec le retard pur ($H_{padé}(s)$) et la vitesse du moteur réelle, la sortie dudit soustracteur (15) communiquant avec l'entrée d'un correcteur supplémentaire (16) destiné à atténuer les oscillations en corrigeant ladite consigne de couple, la constante de temps dudit correcteur supplémentaire étant paramétrée en fonction de la fréquence de résonnance dudit modèle de commande.

2. Système selon la revendication 1, dans lequel le retard pur est une approximation de Padé ($H_{padé}(s)$).

3. Système selon la revendication 1 ou 2, dans lequel le modèle de commande comprend un premier filtre passe-bas ayant une première constante de temps ($T_{p1}$) correspondant à la constante de temps électromécanique.

4. Système selon la revendication 3, dans lequel le modèle de commande comprend un deuxième filtre passe bas ayant une deuxième constante de temps ($T_{p2}$) inférieure à ladite première constante de temps.

5. Système selon l'une quelconque des revendications précédentes, comprenant en outre des moyens de calcul de la somme (11) de la consigne de couple telle que demandée par le conducteur ($C_{cons}$) et d'une consigne de couple obtenue par rétroaction communiquant avec la chaine de traction du véhicule ($G(s)$) pour obtenir une vitesse de rotation du moteur ($\omega_{mot}$), ledit correcteur supplémentaire (16) ayant pour sortie ladite consigne de couple obtenue par rétroaction.

6. Système selon l'une quelconque des revendications précédentes, comprenant un filtre passe-haut (17) apte à fournir ladite consigne de couple obtenue par rétroaction.

7. Procédé de commande de la vitesse de rotation d'un moteur électrique d'un véhicule automobile à propulsion électrique ou hybride comprenant une correction par rétroaction utilisant un modèle de commande ($\hat{G}(s)$), **caractérisé en ce que** l'on corrige par rétroaction une consigne de couple telle que demandée par le conducteur ($C_{cons}$) en utilisant un retard pur ($H_{padé}(s)$), ledit procédé comportant en outre un calcul de la différence entre la vitesse de rotation du moteur et le résultat de la correction utilisant ledit modèle de commande et ledit retard pur, et une correction supplémentaire du résultat de cette différence apte à atténuer les oscillations en corrigeant ladite consigne de couple, ladite correction utilisant une constante de temps paramétrée en fonction de la fréquence de résonnance dudit modèle de commande.

8. Procédé selon la revendication 7, dans lequel le retard est une approximation de Padé ($H_{padé}(s)$).

9. Procédé selon la revendication 7 ou 8, dans lequel la correction comprend un premier filtrage passe bas ayant une première constante de temps ($T_{p1}$) correspondant à la constante de temps électromécanique.

EP 2 943 370 B1

**10.** Procédé selon la revendication 9, dans lequel le modèle de commande comprend un deuxième filtrage passe bas ayant une deuxième constante de temps ($T_{p2}$) inférieure à ladite première constante de temps.

**11.** Procédé selon l'une quelconque des revendications 7 à 10, comprenant en outre un calcul de la somme de la consigne de couple telle que demandée par le conducteur ($C_{cons}$) et d'une consigne de couple obtenue par rétroaction communiquée à la chaine de traction du véhicule (G(s)) pour obtenir une vitesse de rotation du moteur ($\omega_{mot}$), ladite consigne de couple obtenue par rétroaction étant obtenue via ladite correction supplémentaire.

**12.** Procédé selon l'une quelconque des revendications 7 à 11, comprenant un filtrage passe-haut (17) pour obtenir ladite consigne de couple obtenue par rétroaction.


## Patentansprüche

**1.** System zur Regelung der Drehzahl eines Elektromotors eines Kraftfahrzeugs mit Elektro- oder Hybridantrieb, welches ein Korrekturglied umfasst, das eine Rückkopplung des Drehmoment-Sollwertes unter Verwendung eines Steuerungsmodells ($\hat{G}(s)$) bewirkt, wobei die Eingangsgröße des Korrekturglieds ($C_{cons}$) der Drehmoment-Sollwert ist, wie er vom Fahrer angefordert wird, **dadurch gekennzeichnet, dass** das Korrekturglied eine reine Verzögerung ($H_{padé}(s)$) verwendet, wobei der Ausgang des Korrekturglieds (12) mit einem Subtrahierer (15) verbunden ist, welcher die Differenz zwischen einer durch das Steuerungsmodell mit der reinen Verzögerung ($H_{padé}(s)$) modellierten Drehzahl und der tatsächlichen Drehzahl des Motors berechnet, wobei der Ausgang des Subtrahierers (15) mit dem Eingang eines zusätzlichen Korrekturglieds (16) in Verbindung steht, das dazu bestimmt ist, die Schwankungen zu dämpfen, indem es den Drehmoment-Sollwert korrigiert, wobei die Zeitkonstante des zusätzlichen Korrekturglieds in Abhängigkeit von der Resonanzfrequenz des Steuerungsmodells parametrisiert ist.

**2.** System nach Anspruch 1, wobei die reine Verzögerung eine Pade-Approximation ($H_{padé}(s)$) ist .

**3.** System nach Anspruch 1 oder 2, wobei das Steuerungsmodell ein erstes Tiefpassfilter mit einer ersten Zeitkonstante ($T_{p1}$) umfasst, die der elektromechanischen Zeitkonstante entspricht.

**4.** System nach Anspruch 3, wobei das Steuerungsmodell ein zweites Tiefpassfilter mit einer zweiten Zeitkonstante ($T_{p2}$) umfasst, die kleiner als die erste Zeitkonstante ist.

**5.** System nach einem der vorhergehenden Ansprüche, welches außerdem Mittel zur Berechnung der Summe (11) des Drehmoment-Sollwertes, wie er vom Fahrer angefordert wird ($C_{cons}$), und eines durch Rückkopplung erhaltenen Drehmoment-Sollwertes umfasst, die mit dem Antriebstrang des Fahrzeugs (G(s)) in Kommunikation steht, um eine Drehzahl des Motors ($\omega_{mot}$) zu erhalten, wobei das zusätzliche Korrekturglied (16) als Ausgang den durch Rückkopplung erhaltenen Drehmoment-Sollwert aufweist.

**6.** System nach einem der vorhergehenden Ansprüche, welches ein Hochpassfilter (17) umfasst, das dafür ausgelegt ist, den durch Rückkopplung erhaltenen Drehmoment-Sollwert zu liefern.

**7.** Verfahren zur Regelung der Drehzahl eines Elektromotors eines Kraftfahrzeugs mit Elektro- oder Hybridantrieb, welches eine Korrektur durch Rückkopplung unter Verwendung eines Steuerungsmodells ($\hat{G}(s)$) umfasst, **dadurch gekennzeichnet, dass** ein Drehmoment-Sollwert, wie er vom Fahrer angefordert wird ($C_{cons}$), unter Verwendung einer reinen Verzögerung ($H_{padé}(s)$) durch Rückkopplung korrigiert wird, wobei das Verfahren außerdem eine Berechnung der Differenz zwischen der Drehzahl des Motors und dem Ergebnis der Korrektur unter Verwendung des Steuerungsmodells und der reinen Verzögerung und eine zusätzliche Korrektur des Ergebnisses dieser Differenz, die dafür ausgelegt ist, die Schwankungen zu dämpfen, indem der Drehmoment-Sollwert korrigiert wird, umfasst, wobei diese Korrektur eine Zeitkonstante verwendet, die in Abhängigkeit von der Resonanzfrequenz des Steuerungsmodells parametrisiert ist.

**8.** Verfahren nach Anspruch 7, wobei die Verzögerung eine Pade-Approximation ($H_{padé}(s)$) ist.

**9.** Verfahren nach Anspruch 7 oder 8, wobei die Korrektur eine erste Tiefpassfilterung mit einer ersten Zeitkonstante ($T_{p1}$) umfasst, die der elektromechanischen Zeitkonstante entspricht.

**10.** Verfahren nach Anspruch 9, wobei das Steuerungsmodell eine zweite Tiefpassfilterung mit einer zweiten Zeitkon-

stante ($T_{p2}$) umfasst, die kleiner als die erste Zeitkonstante ist.

**11.** Verfahren nach einem der Ansprüche 7 bis 10, welches außerdem eine Berechnung der Summe des Drehmoment-Sollwertes, wie er vom Fahrer angefordert wird ($C_{cons}$), und eines durch Rückkopplung erhaltenen Drehmoment-Sollwertes umfasst, die dem Antriebstrang des Fahrzeugs (G(s)) übermittelt wird, um eine Drehzahl des Motors ($\omega_{mot}$) zu erhalten, wobei der durch Rückkopplung erhaltene Drehmoment-Sollwert über die zusätzliche Korrektur erhalten wird.

**12.** Verfahren nach einem der Ansprüche 7 bis 11, welches eine Hochpassfilterung (17) umfasst, um den durch Rückkopplung erhaltenen Drehmoment-Sollwert zu erhalten.

**Claims**

**1.** System for controlling the rotation speed of an electric motor of a motor vehicle with electric or hybrid propulsion comprising a torque setpoint feedback-based corrector using a control model ($\hat{G}(s)$), the input quantity of the corrector ($C_{cons}$) being the torque setpoint as demanded by the driver, **characterized in that** the corrector uses a pure delay ($H_{padé}(s)$), the output of said corrector (12) being connected to a subtractor (15) which calculates the difference between a rotation speed modelled by the control model with the pure delay ($H_{padé}(s)$) and the real motor speed, the output of said subtractor (15) communicating with the input of an additional corrector (16) intended to attenuate the oscillations by correcting said torque setpoint, the time constant of said additional corrector being parameterized as a function of the resonance frequency of said control module.

**2.** System according to Claim 1, wherein the pure delay is a Pade approximation ($H_{padé}(s)$).

**3.** System according to Claim 1 or 2, wherein the control model comprises a first low-pass filter having a first time constant ($T_{p1}$) corresponding to the electromechanical time constant.

**4.** System according to Claim 3, wherein the control model comprises a second low-pass filter having a second time constant ($T_{p2}$) lower than said first time constant.

**5.** System according to any one of the preceding claims, also comprising means for calculating the sum (11) of the torque setpoint as demanded by the driver ($C_{cons}$) and a torque setpoint obtained by feedback communicating with the power chain of the vehicle (G(s)) to obtain a rotation speed of the motor ($\omega_{mot}$), said additional corrector (16) having for output said torque setpoint obtained by feedback.

**6.** System according to any one of the preceding claims, comprising a high-pass filter (17) capable of supplying said torque setpoint obtained by feedback.

**7.** Method for controlling the rotation speed of an electric motor of a motor vehicle with electric or hybrid propulsion comprising a feedback correction using a control model ($\hat{G}(s)$), **characterized in that** a torque setpoint as demanded by the driver ($C_{cons}$) is corrected by feedback by using a pure delay ($H_{padé}(s)$), said method also comprising a calculation of the difference between the rotation speed of the motor and the result of the correction using said control module and said pure delay, and an additional correction of the result of this difference capable of attenuating the oscillations by correcting said torque setpoint, said correction using a time constant parameterized as a function of the resonance frequency of said control module.

**8.** Method according to Claim 7, wherein the delay is a Pade approximation ($H_{padé}(s)$).

**9.** Method according to Claim 7 or 8, wherein the correction comprises a first low-pass filtering having a first time constant ($T_{p1}$) corresponding to the electromechanical time constant.

**10.** Method according to Claim 9, wherein the control model comprises a second low-pass filtering having a second time constant ($T_{p2}$) lower than said first time constant.

**11.** Method according to any one of Claims 7 to 10, also comprising a calculation of the sum of the torque setpoint as demanded by the driver ($C_{cons}$) and a torque setpoint obtained by feedback communicated to the power chain of the vehicle (G(s)) to obtain a rotation speed of the motor ($\omega_{mot}$), said torque setpoint obtained by feedback being obtained via said additional correction.

12. Method according to any one of Claims 7 to 11, comprising a high-pass filtering (17) to obtain said torque setpoint obtained by feedback.

# FIG.1
# ART ANTERIEUR

# FIG.2

## FIG.3

EP 2 943 370 B1

## RÉFÉRENCES CITÉES DANS LA DESCRIPTION

### Documents brevets cités dans la description

- WO 2012042325 A
- WO 2012011521 A